# EUROPÄISCHE PATENTSCHRIFT

(11) **EP 3 308 976 B1**
(45) Veröffentlichungstag und Bekanntmachung des Hinweises auf die Patenterteilung: **04.03.2020**
(21) Anmeldenummer: 17181573.1
(22) Anmeldetag: 17.07.2017
(51) Int. Cl.: B60C 9/20, B60C 9/28, B60C 9/00

(54) **FAHRZEUGLUFTREIFEN**
PNEUMATIC TYRES FOR A VEHICLE
PNEUMATIQUES DE VÉHICULE

(30) Priorität: 14.10.2016 DE 102016220028
(43) Veröffentlichungstag der Anmeldung: 18.04.2018
(73) Patentinhaber: Continental Reifen Deutschland GmbH, 30165 Hannover (DE)
(72) Erfinder: Ludwig, Reinhard, 31848 Bad Münder (DE); Blümel, Viktor, 30459 Hannover (DE)
(74) Vertreter: Finger, Karsten

(56) Entgegenhaltungen:
- EP-A2- 2 332 744
- JP-A- 2013 035 428
- US-A1- 2012 312 441
- US-B2- 7 416 006

## Beschreibung

Die Erfindung betrifft einen Fahrzeugluftreifen in Radialbauart mit einer Karkasseinlage, zwei Gürtellagen und einer Gürtelbandage, wobei in den seitlichen Gürtelbereichen radial innerhalb der radial innere Gürtellage jeweils ein Verstärkungsstreifen angeordnet ist, welcher in Kontakt mit der radial inneren Gürtellage sowie der Karkasseinlage über den Reifenumfang verläuft, wobei jede Gürtellage parallel zueinander verlaufende Festigkeitsträger aufweist, welche unter einem Winkel von 20° bis 40° zur Umfangsrichtung verlaufen und wobei die Festigkeitsträger in der einen Gürtellage die Festigkeitsträger in der anderen Gürtellage kreuzen, und wobei die Verstärkungsstreifen in Gummimaterial eingebettete parallel zueinander und unter einem Winkel von mindestens 55° zur Umfangsrichtung verlaufende Stahlfilamente mit einem Durchmesser bzw. einer in radialer Richtung ermittelten Dicke von 0,2 mm bis 0,5 mm und einer Zugfestigkeit von 3050 N/mm² bis 3650 N/mm² aufweisen.

Ein derartiger Fahrzeugluftreifen ist beispielsweise aus der JP 2013 035 428 A bekannt. Der Fahrzeugluftreifen weist daher zwei Gürtellagen, eine Gürtelbandage und innerhalb der radial inneren Gürtellage Verstärkungsstreifen auf. Die Gürtellagen enthalten Festigkeitsträger aus Stahl oder organischen Fasern, beispielsweise Polyester, Rayon oder Nylon, welche zur Umfangsrichtung unter einem Winkel von 20° bis 30° verlaufen. Die Gürtelbandage kann zwei schmale, die Gürtelkanten der radial äußeren Gürtellage abdeckende Bandagteile aufweisen oder die Gürtellagen über ihre gesamte Breite in bekannter Weise abdecken. Die Verstärkungsstreifen enthalten unter einem Winkel von 90° zur Umfangsrichtung verlaufende Stahlfilamente mit einem Durchmesser von 0,27 mm bis 0,45 mm und einer Zugfestigkeit von beispielsweise 3200 N/mm².

Aus der US 2012/0312441 A1 ist ein Fahrzeugluftreifen mit zwei Gürtellagen, welche unter einem Winkel von 15° bis 45° zur Umfangsrichtung verlaufende Stahlkorde aufweisen, bekannt. In den seitlichen Gürtelbereichen ist radial innerhalb der radial inneren Gürtellage jeweils ein Verstärkungsstreifen angeordnet, welcher unter einem Winkel von 80° bis 90° zur Umfangsrichtung verlaufende Stahlfilamente enthält, wobei die Stahlfilamente beispielsweise eine Zugfestigkeit von 2700 N/mm² und einen Durchmesser von 0,32 mm aufweisen. Jeder Verstärkungsstreifen weist ferner in axialer Richtung eine Breite von mindestens 30,0 mm auf und wird laufstreifenaußenseitig von einem Randabschnitt der radial äußeren Gürtellage mit einer Breite von maximal 30 mm überragt. Ein zwischen den beiden Verstärkungsstreifen in axialer Richtung ermittelter Abstand beträgt 20% bis 60% der Breite der Gürtellage mit der kleineren Breite. Ein solcher Reifen soll einen geringen Rollwiderstand aufweisen, wobei eine gute Reifenhaltbarkeit erhalten bleiben soll.

Ferner ist aus der US 7 416 006 B2 ein Fahrzeugluftreifen mit radial innerhalb der radial inneren Gürtellage angeordneten Verstärkungsstreifen bekannt. Die Verstärkungsstreifen bestehen aus in Gummimaterial eingebetteten Korden, welche übereinstimmend zu den in den Gürtellagen verlaufenden Korden ausgeführt sind. Die Korde bestehen aus vier miteinander verdrillten Stahlfilamenten, die jeweils einen Durchmesser von 0,26 mm aufweisen und verlaufen zur Umfangsrichtung unter einem Winkel größer 60°, insbesondere von 90°, und weisen innerhalb der Verstärkungsstreifen gegenseitige Abstände von durchschnittlich 2,0 mm auf. Die Verstärkungsstreifen sind laufstreifenaußenseitig jeweils von Abschnitten der beiden Gürtellagen überragt und weisen in axialer Richtung jeweils eine Breite von 37% bis 49% der größten Breite des Gürtelverbandes auf. Ein derart ausgeführter Reifen soll eine verbesserte Performance, einen erhöhten Abriebswiderstand und eine erhöhte Haltbarkeit aufweisen.

Aus der GB 2 017 019 A ist ein weiterer Fahrzeugluftreifen mit zwei Gürtellagen, einer Gürtelbandage und radial innerhalb der radial inneren Gürtellage in den seitlichen Gürtelbereichen verlaufenden Verstärkungsstreifen bekannt. Die Verstärkungsstreifen bestehen aus in Gummimaterial eingebetteten, zur Umfangsrichtung unter einem Winkel von 60° bis 70° verlaufenden textilen Korden.

Die aus der US 3 195 604 A und der US 3 506 052 A bekannten Fahrzeugluftreifen weisen ebenfalls jeweils zwei Gürtellagen und radial innerhalb der radial inneren Gürtellage verlaufende Verstärkungsstreifen auf. Bei dem aus der US 3 195 604 A bekannten Reifen reichen die Verstärkungsstreifen bis zu den Randkanten der radial inneren Gürtellage, weisen als Festigkeitsträger unter einem Winkel von bis zu 60° zur Umfangsrichtung verlaufende metallische Korde sowie jeweils eine Breite von 32% bis 41% der Laufstreifenbreite auf. Bei dem aus US 3 506 052 A bekannten Reifen enthalten die Verstärkungsstreifen textile Festigkeitsträger, die unter einem Winkel von 90° zur Umfangsrichtung verlaufen.

Die Gürtellagen eines Fahrzeugluftreifens, deren Festigkeitsträger einander kreuzen, sorgen für die Steifigkeit des Laufstreifens in Längs- und Querrichtung, um eine gute Kraftübertragung zu ermöglichen und die Seitenführung zu verbessern. Gürtelbandagen aus einer Lage oder mehreren Lagen, welche die Gürtellagen abdecken, bewirken vor allem beim Fahren mit hohen Geschwindigkeiten eine gute Aufnahme von in Umfangsrichtung wirkenden Kräften.

Verstärkungsstreifen, wie sie aus dem Stand der Technik bekannt sind, tragen zu einer gewissen Verbesserung der Schräglaufsteifigkeit des Reifens bei, wobei die Kompressionsresistenz von Verstärkungsstreifen mit textilen Korden meist nicht zufriedenstellend ist. Es ist bekannt, dass sich die gesamte Kraft in der Bodenaufstandsfläche aus der Summe der Einzelkräfte der Profilpositive in Längs- und Querrichtung der Bodenaufstandsfläche ergibt. Die Schräglaufsteifigkeit des Reifens entspricht dieser gesamten Kraft bezogen auf den Schräglaufwinkel und ist eine wichtige Kenngröße zur Charakterisierung eines Fahrzeugluftreifens bezüglich der Fahr- und Lenkeigenschaften am Fahrzeug.

Der Erfindung liegt die Aufgabe zugrunde, bei einem Fahrzeugluftreifen der eingangs genannten Art unter Bedachtnahme auf ein geringes Gewicht eine gute Schräglaufsteifigkeit sicherzustellen.

Die gestellte Aufgabe wird erfindungsgemäß dadurch gelöst,
dass die Verstärkungsstreifen in axialer Richtung eine Breite von 20% bis 35% der Breite der breiteren Gürtellage aufweisen und
dass der Winkel der Stahlfilamente in den Verstärkungsstreifen (2c) relativ zur Umfangsrichtung um 30° bis 40° größer ist als der Winkel, unter welchem die Festigkeitsträger in den beiden Gürtellagen verlaufen.

Erfindungsgemäß ausgeführte Verstärkungsstreifen weisen somit als Festigkeitsträger Stahlfilamente auf. Überraschenderweise hat sich herausgestellt, dass sich mit Stahlfilamenten als Festigkeitsträger in den Verstärkungsstreifen eine Kompressionsresistenz erzielen lässt, die für eine ausgesprochen gute Schräglaufsteifigkeit des Reifens sorgt. Für eine gute Schräglaufsteifigkeit sind ferner die angegebene Breite der Verstärkungsstreifen und die angegebene Winkelung der Sahlfilamente besonders vorteilhaft. Da die Stahlfilamente gegenüber den in Verstärkungsstreifen üblichen, aus mehreren Filamenten bestehenden Stahlkorden ein geringeres Gewicht aufweisen, ist das Gewicht des Reifens geringer, was für einen geringeren Rollwiderstand des Reifens von Vorteil ist.

Bei einer bevorzugten Ausführungsvariante der Erfindung ist vorgesehen ist, dass die Verstärkungsstreifen laufstreifenaußenseitig jeweils von einem Randabschnitt der radial inneren Gürtellage überragt sind, dessen Breite 5,0 mm bis 15,0 mm beträgt. Des Weiteren ist es vorteilhaft, wenn die Verstärkungsstreifen laufstreifenaußenseitig auch jeweils von einem Randabschnitt der radial äußeren Gürtellage überragt sind, dessen Breite bis zu 10 mm beträgt. Alternativ können die Verstärkungsstreifen derart angeordnet sein, dass ihre laufstreifenaußenseitigen Randkanten mit den Randkanten der radial äußeren Gürtellage fluchten. Bei diesen Ausführungen der Erfindung tragen die Gürtellagen gemeinsam mit den Verstärkungsstreifen zu einer für eine gute Schräglaufsteifigkeit vorteilhaften Versteifung des Reifens bei.

Bei einer weiteren bevorzugten Ausführungsvariante beträgt der Winkel der Stahlfilamente in den Verstärkungsstreifen relativ zur Umfangsrichtung bis zu 65°, insbesondere 60 ± 2°. Verstärkungsstreifen mit derart orientierten Stahlfilamenten sind für eine gute Schräglaufsteifigkeit des Reifens besonders günstig. Eine weitere vorteilhafte Maßnahme sieht vor, dass der Winkel der Stahlfilamente in den Verstärkungsstreifen relativ zur Umfangsrichtung um 34° bis 36° größer ist als der Winkel, unter welchem die Festigkeitsträger in den beiden Gürtellagen verlaufen. Zusätzlich ist es von Vorteil, wenn die Stahlfilamente in den Verstärkungsstreifen die Festigkeitsträger in der radial inneren Gürtellage kreuzen.

Auch die Breite der Verstärkungsstreifen nimmt Einfluss auf die Schräglaufsteifigkeit des Reifens. Besonders vorteilhat ist eine Breite der Verstärkungsstreifen von 25% bis 30% der Breite der breiteren Gürtellage.

Für einen geringen Rollwiderstand des Fahrzeugluftreifens ist es von Vorteil, wenn die Stahlfilamente einen Durchmesser bzw. eine in radialer Richtung ermittelte Dicke von bis zu 0,3 mm aufweisen.

Besonders bevorzugt sind Stahlfilamente mit einer Zugfestigkeit von 3050 N/mm² bis 3330 N/mm² oder einer Zugfestigkeit größer 3330 N/mm² bis 3650 N/mm² auf. Die Stahlfilamente bestehen daher bevorzugter Weise aus Stahl der Festigkeitsklassen HT (high tensile) oder UHT (ultra high tensile).

Bei weiteren vorteilhaften Ausführungsvarianten ist vorgesehen, dass die Stahlfilamente in den Verstärkungsstreifen mit einer Dichte von 70 epdm bis 140 epdm, insbesondere von 100 epdm bis 120 epdm, vorzugsweise von 105 epdm bis 115 epdm, angeordnet sind. Eine derartige Anordnung der Stahlfilamente in den Verstärkungsstreifen sorgt für eine gute Balance zwischen dem Rollwiderstand und der Schräglaufsteifigkeit des Fahrzeugluftreifens.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 einen schematischen Querschnitt durch einen Fahrzeugluftreifen im Bereich des Laufstreifens und des Gürtelverbandes mit einer Ausführungsvariante der Erfindung und
Fig. 2 eine Draufsicht auf Umfangsabschnitte der Lagen des Gürtelverbandes sowie auf Verstärkungsstreifen.

Gemäß der Erfindung ausgeführte Fahrzeugluftreifen sind Reifen in Radialbauart für Personenkraftwagen, Vans oder Light-Trucks.

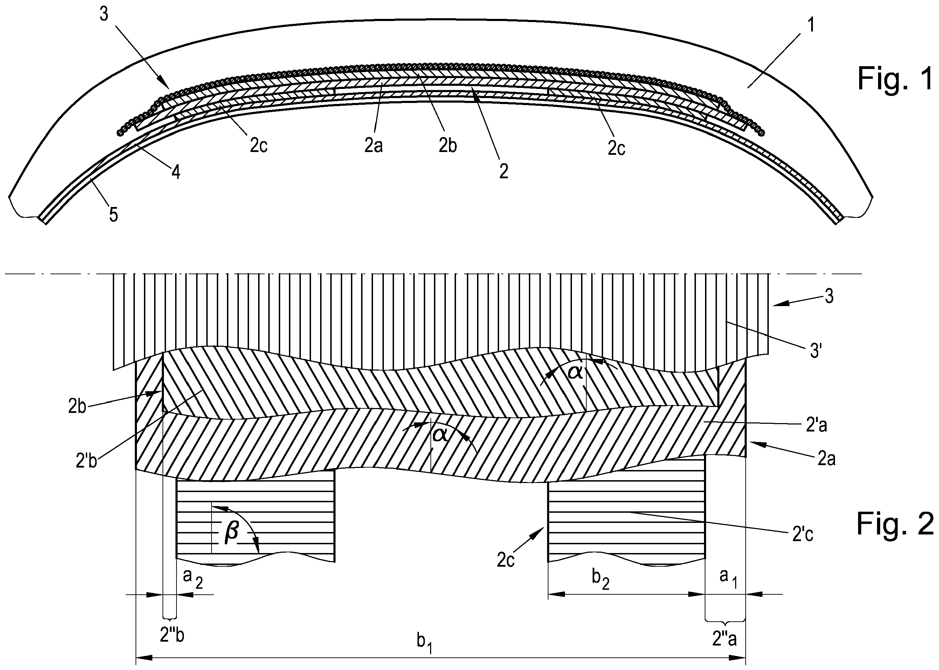

In Fig. 1 sind von den üblichen Bauteilen eines solchen Fahrzeugluftreifens ein Laufstreifen 1, der üblicherweise profiliert ist, ein radial innerhalb des Laufstreifens 1 angeordneter Gürtelverband 2 mit einer Gürtelbandage 3 sowie Abschnitte einer Karkasseinlage 4 und einer luftdichten Innenschicht 5 dargestellt. Seitenwände sowie Wulstbereiche mit Wulstkernen, Kernprofilen und weiteren gegebenenfalls in den Wulstbereichen vorgesehenen Verstärkungslagen sind nicht gezeigt. Der Laufstreifen 1, die Karkasseinlage 4, die Innenschicht 5 sowie die nicht gezeigten Seitenwände und Wulstbereiche können in an sich bekannter Weise ausgeführt sein.

Der Gürtelverband 2 weist zwei Gürtellagen 2a, 2b auf, wobei die erste, radial innere Gürtellage 2a breiter ausgeführt ist als die zweite, radial äußere Gürtellage 2b und eine Breite b₁ aufweist (Fig. 2). Der Gürtelverband 2 ist von der Gürtelbandage 3 bedeckt, welche über die beiden Gürtellagen 2a, 2b inklusive der Randkanten der Gürtellagen 2a, 2b verläuft.

Die beim gezeigten Ausführungsbeispiel einlagige Gürtelbandage 3 besteht aus in Gummimaterial eingebetteten textilen Festigkeitsträgern 3' (Fig. 2), welche parallel zueinander sowie beim gezeigten Ausführungsbeispiel in Umfangsrichtung verlaufen. Die textilen Festigkeitsträger 3' können auch jeweils unter einem bis zu 10°, insbesondere bis zu 5°, von der Umfangsrichtung abweichenden Winkel verlaufen. Die textilen Festigkeitsträger 3' bestehen beispielsweise aus Polyethylenterephthalat, Polyamid oder Aramid. Die Gürtelbandage 3 kann ferner in an sich bekannter Weise als Spulbandage und zumindest abschnittsweise mehrlagig ausgeführt sein.

Die Gürtellagen 2a, 2b bestehen aus in Gummimaterial, der sogenannten Gürtelgummierung, eingebetteten Festigkeitsträgern 2'a, 2'b (Fig. 2). Wie Fig. 2 zeigt, verlaufen die Festigkeitsträger 2'a, 2'b in jeder Gürtellage 2a, 2b parallel zueinander sowie zur Umfangsrichtung jeweils unter einem Winkel α von 20° bis 40°, insbesondere von bis zu 35°, wobei die Festigkeitsträger 2'a der radial inneren Gürtellage 2a die Festigkeitsträger 2'b der radial äußeren Gürtellage 2b in bekannter Weise kreuzen. Bei PKW-Reifen verlaufen die Festigkeitsträger 2'a, 2'b zur Umfangsrichtung vorzugsweise unter einem Winkel α von bis zu 30°, insbesondere von etwa 28°. Bei Van- und Light-Truck-Reifen verlaufen die Festigkeitsträger 2'a, 2'b insbesondere derart, dass sie mit der Umfangsrichtung einen Winkel α von bis zu 25°, insbesondere von in etwa 20°, einschließen. Bei der gezeigten, bevorzugten Ausführungsform verlaufen die Festigkeitsträger 2'a rechtssteigend und die Festigkeitsträger 2'b linkssteigend. Alternativ können die Festigkeitsträger 2'a linkssteigend und Festigkeitsträger 2'b rechtssteigend verlaufen. Die Festigkeitsträger 2'a, 2'b der Gürtellagen 2a, 2b sind insbesondere in an sich bekannter Weise ausgeführte Stahlkorde, beispielsweise der Konstruktion 2 x 0,30 mm..

Radial innerhalb der radial inneren Gürtellage 2a sind seitlich Verstärkungsstreifen 2c angeordnet, welche in Kontakt mit der radial inneren Gürtellage 2a sowie in Kontakt mit der Karkasseinlage 4 (Fig. 1) und über den Reifenumfang verlaufen. Die Verstärkungsstreifen 2c sind jeweils von einem Randabschnitt 2"a der radial inneren Gürtellage 2a laufstreifenaußenseitig überragt, welcher eine Breite a₁ von 5,0 mm bis 15,0 mm aufweist. Beim gezeigten Ausführungsbeispiel sind die Verstärkungsstreifen 2c, bezogen auf ihre laufstreifenaußenseitigen Randkanten, ferner jeweils von einem Randabschnitt 2"b der radial äußeren schmäleren Gürtellage 2b überragt, welcher eine Breite a₂ von bis zu 10,0 mm aufweist. Die Verstärkungsstreifen 2c können ferner derart verlaufen, dass ihre laufstreifenaußenseitigen Randkanten mit den Randkanten der radial äußeren Gürtellage 2b fluchten, sodass die Verstärkungsstreifen 2c von der radial äußeren Gürtellage 2b nicht überragt werden.

Die Verstärkungsstreifen 2c weisen in axialer Richtung jeweils eine Breite b₂ von 20% bis 35%, insbesondere von 25% bis 30%, der Breite der breiteren Gürtellage, d.h. beim gezeigten Ausführungsbeispiel der Breite b₁ der radial inneren Gürtellage 2a, auf. Die Verstärkungsstreifen 2c bestehen aus in Gummimaterial eingebetteten Festigkeitsträgern 2'c, welche unter einem Winkel β von zumindest 55° bis zur Umfangsrichtung verlaufen. Bei einer bevorzugten Ausführungsvariante beträgt der Winkel β bis zu 65°, insbesondere 60° ± 2° (Fertigungstoleranz), wobei die Festigkeitsträger 2'c der Verstärkungsstreifen 2c die Festigkeitsträger 2'a der radial inneren Gürtellage 2a vorzugsweise kreuzen. Diese Varianten bewirken beim Abrollen des Fahrzeugluftreifens eine für die Schräglaufsteifigkeit des Reifens besonders günstige Versteifung Weiterhin ist der Winkel β um 30° bis 40°, insbesondere um 34° bis 36°, größer als der bereits erwähnte Winkel α, unter welchem die Festigkeitsträger 2'a, 2'b der beiden Gürtellagen 2a, 2b verlaufen. Bei einer weiteren bezüglich Schräglaufsteifigkeit vorteilhaften alternativen Ausführungsvariante beträgt der Winkel β 90° ± 2° (Fertigungstoleranz).

Die Festigkeitsträger 2'c der Verstärkungsstreifen 2c sind Stahlfilamente (Monofilamente aus Stahl), welche aus Stahl der Festigkeitsklasse HT (high tensile) oder UHT (ultra high tensile) bestehen, wobei Stahlfilamente der Festigkeitsklasse HT eine Zugfestigkeit von 3050 N/mm² bis 3330 N/mm² und Stahlfilamente der Festigkeitsklasse UHT eine Zugfestigkeit größer 3330 N/mm² bis 3650 N/mm² aufweisen. In jedem Verstärkungsstreifen 2c sind die Stahlfilamente mit einer Dichte von 70 epdm (ends per decimeter) bis 140 epdm, insbesondere von 100 epdm bis 120 epdm, und bevorzugter Weise von 105 epdm bis 115 epdm angeordnet. Besonders bevorzugt ist eine Dichte von etwa 110 epdm.

Die Stahlfilamente weisen vorzugsweise einen kreisförmigen Querschnitt mit einem Durchmesser von 0,2 mm bis 0,5 mm, insbesondere von bis zu 0,3 mm, auf. Alternativ können die Stahlfilamente 2 einen flachen Querschnitt, beispielsweise einen ovalen Querschnitt aufweisen. Solche Stahlfilamente werden innerhalb der Verstärkungsstreifen 2c derart angeordnet, dass ihre geringere Dicke, die 0,2 mm bis 0,5 mm, insbesondere bis 0,3 mm, beträgt, in radialer Richtung vorliegt.

Bei einer bevorzugten Ausführungsvariante weisen die Stahlfilamente einen Durchmesser bzw. eine Dicke von 0,3 mm auf und sind in jedem Verstärkungsstreifen 2c mit einer Dichte von etwa 110 epdm angeordnet.

### Bezugsziffernliste

- 1: Laufstreifen
- 2: Gürtelverband
- 2a, 2b: Gürtellagen
- 2'a, 2'b: Festigkeitsträger
- 2"a, 2"b: Randabschnitt
- 2c: Verstärkungsstreifen
- 2'c: Festigkeitsträger
- 3: Gürtelbandage
- 3': Festigkeitsträger
- 4: Karkasseinlage
- 5: Innenschicht
- a₁, a₂, b₁, b₂: Breite

## Patentansprüche

1. Fahrzeugluftreifen in Radialbauart mit einer Karkasseinlage (4), zwei Gürtellagen (2a, 2b) und einer Gürtelbandage (3), wobei in den seitlichen Gürtelbereichen radial innerhalb der radial innere Gürtellage (2a) jeweils ein Verstärkungsstreifen (2c) angeordnet ist, welcher in Kontakt mit der radial inneren Gürtellage (2a) sowie der Karkasseinlage (4) über den Reifenumfang verläuft, wobei jede Gürtellage (2a, 2b) parallel zueinander verlaufende Festigkeitsträger (2'a, 2'b) aufweist, welche unter einem Winkel (α) von 20° bis 40° zur Umfangsrichtung verlaufen und wobei die Festigkeitsträger (2'a) in der einen Gürtellage (2a) die Festigkeitsträger (2'b) in der anderen Gürtellage (2b) kreuzen, und wobei die Verstärkungsstreifen (2c) in Gummimaterial eingebettete parallel zueinander und unter einem Winkel (β) von mindestens 55° zur Umfangsrichtung verlaufende Stahlfilamente (2'c) mit einem Durchmesser bzw. einer in radialer Richtung ermittelten Dicke von 0,2 mm bis 0,5 mm und einer Zugfestigkeit von 3050 N/mm² bis 3650 N/mm² aufweisen, **dadurch gekennzeichnet,**
**dass** die Verstärkungsstreifen (2c) in axialer Richtung eine Breite (b₂) von 20% bis 35% der Breite (b₁) der breiteren Gürtellage (2a) aufweisen und
**dass** der Winkel (β) der Stahlfilamente in den Verstärkungsstreifen (2c) relativ zur Umfangsrichtung um 30° bis 40° größer ist als der Winkel (a), unter welchem die Festigkeitsträger (2'a, 2'b) in den beiden Gürtellagen (2a, 2b) verlaufen.

2. Fahrzeugluftreifen nach Anspruch 1, **dadurch gekennzeichnet, dass** die Verstärkungsstreifen (2c) laufstreifenaußenseitig jeweils von einem Randabschnitt (2"a) der radial inneren Gürtellage (2a) überragt sind, dessen Breite (a₁) 5,0 mm bis 15,0 mm beträgt.

3. Fahrzeugluftreifen nach Anspruch 1 oder 2, **dadurch gekennzeichnet, dass** die Verstärkungsstreifen (2c) laufstreifenaußenseitig jeweils von einem Randabschnitt (2"b) der radial äußeren Gürtellage (2a) überragt sind, dessen Breite (a₂) bis zu 10 mm beträgt.

4. Fahrzeugluftreifen nach Anspruch 1 oder 2, **dadurch gekennzeichnet, dass** die Verstärkungsstreifen (2c) derart angeordnet sind, dass ihre laufstreifenaußenseitigen Randkanten mit den Randkanten der radial äußeren Gürtellage (2b) fluchten.

5. Fahrzeugluftreifen nach einem der Ansprüche 1 bis 4, **dadurch gekennzeichnet, dass** der Winkel (β) der Stahlfilamente in den Verstärkungsstreifen (2c) relativ zur Umfangsrichtung bis zu 65° beträgt.

6. Fahrzeugluftreifen nach einem der Ansprüche 1 bis 5, **dadurch gekennzeichnet**, der Winkel (β) der Stahlfilamente in den Verstärkungsstreifen (2c) relativ zur Umfangsrichtung 60 ± 2° beträgt.

7. Fahrzeugluftreifen nach einem der Ansprüche 1 bis 6, **dadurch gekennzeichnet, dass** der Winkel (β) der Stahlfilamente in den Verstärkungsstreifen (2c) relativ zur Umfangsrichtung um 34° bis 36° größer ist als der Winkel (a), unter welchem die Festigkeitsträger (2'a, 2'b) in den beiden Gürtellagen (2a, 2b) verlaufen.

8. Fahrzeugluftreifen nach einem der Ansprüche 1 bis 7, **dadurch gekennzeichnet, dass** die Stahlfilamente in den Verstärkungsstreifen (2c) die Festigkeitsträger (2'a) in der radial inneren Gürtellage (2a) kreuzen.

9. Fahrzeugluftreifen nach einem der Ansprüche 1 bis 8, **dadurch gekennzeichnet, dass** die Breite (b₂) der Verstärkungsstreifen (2c) 25% bis 30% der Breite (b₁) der breiteren Gürtellage (2a) beträgt.

10. Fahrzeugluftreifen nach einem der Ansprüche 1 bis 9, **dadurch gekennzeichnet, dass** die Stahlfilamente einen Durchmesser bzw. eine in radialer Richtung ermittelte Dicke von bis zu 0,3 mm aufweisen.

11. Fahrzeugluftreifen nach einem der Ansprüche 1 bis 10, **dadurch gekennzeichnet, dass** die Stahlfilamente eine Zugfestigkeit von 3050 N/mm² bis 3330 N/mm² aufweisen.

12. Fahrzeugluftreifen nach einem der Ansprüche 1 bis 10, **dadurch gekennzeichnet, dass** die Stahlfilamente eine Zugfestigkeit größer 3330 N/mm² bis 3650 N/mm² aufweisen.

13. Fahrzeugluftreifen nach einem der Ansprüche 1 bis 12, **dadurch gekennzeichnet, dass** die Stahlfilamente in den Verstärkungsstreifen (2c) mit einer Dichte von 70 epdm bis 140 epdm, insbesondere von 100 epdm bis 120 epdm, vorzugsweise von 105 epdm bis 115 epdm, angeordnet sind.

## Claims

1. Pneumatic vehicle tyre of a radial type of construction with a carcass insert (4), two belt plies (2a, 2b) and a belt bandage (3), wherein, in the lateral belt regions, a bracing strip (2c), which runs over the circumference of the tyre while in contact with the radially inner belt ply (2a) and the carcass insert (4), is respectively arranged radially within the radially inner belt ply (2a), wherein each belt ply (2a, 2b) has reinforcing elements (2'a, 2'b), which run parallel to one another and at an angle (α) of 20° to 40° to the circumferential direction, and wherein the reinforcing elements (2'a) in the one belt ply (2a) cross the reinforcing elements (2'b) in the other belt ply (2b), and wherein the bracing strips (2c) comprise steel filaments (2'c), which are embedded in rubber material, run parallel to one another and at an angle (β) of at least 55° to the circumferential direction and have a diameter or a thickness, determined in the radial direction, of 0.2 mm to 0.5 mm and a tensile strength of 3050 N/mm² to 3650 N/mm²,
**characterized**
**in that** the bracing strips (2c) have in the axial direction a width (b₂) of 20% to 35% of the width (b₁) of the wider belt ply (2a) and
**in that** the angle (β) of the steel filaments in the bracing strips (2c) in relation to the circumferential direction is greater by 30° to 40° than the angle (α) at which the reinforcing elements (2'a, 2'b) run in the two belt plies (2a, 2b).

2. Pneumatic vehicle tyre according to Claim 1, **characterized in that** the bracing strips (2c) respectively have rising up above them on the outer side of the tread a peripheral portion (2"a) of the radially inner belt ply (2a), the width (a₁) of which is 5.0 mm to 15.0 mm.

3. Pneumatic vehicle tyre according to Claim 1 or 2, **characterized in that** the bracing strips (2c) respectively have rising up above them on the outer side of the tread a peripheral portion (2"b) of the radially outer belt ply (2a), the width (a₂) of which is up to 10 mm.

4. Pneumatic vehicle tyre according to Claim 1 or 2, **characterized in that** the bracing strips (2c) are arranged in such a way that their peripheral edges on the outer side of the tread are in line with the peripheral edges of the radially outer belt ply (2b).

5. Pneumatic vehicle tyre according to one of Claims 1 to 4, **characterized in that** the angle (β) of the steel filaments in the bracing strips (2c) in relation to the circumferential direction is up to 65°.

6. Pneumatic vehicle tyre according to one of Claims 1 to 5, **characterized in that** the angle (β) of the steel filaments in the bracing strips (2c) in relation to the circumferential direction is 60 ± 2°.

7. Pneumatic vehicle tyre according to one of Claims 1 to 6, **characterized in that** the angle (β) of the steel filaments in the bracing strips (2c) in relation to the circumferential direction is greater by 34° to 36° than the angle (α) at which the reinforcing elements (2'a, 2'b) run in the two belt plies (2a, 2b).

8. Pneumatic vehicle tyre according to one of Claims 1 to 7, **characterized in that** the steel filaments in the bracing strips (2c) cross the reinforcing elements (2'a) in the radially inner belt ply (2a).

9. Pneumatic vehicle tyre according to one of Claims 1 to 8, **characterized in that** the width (b₂) of the bracing strips (2c) is 25% to 30% of the width (b₁) of the wider belt ply (2a).

10. Pneumatic vehicle tyre according to one of Claims 1 to 9, **characterized in that** the steel filaments have a diameter or a thickness, determined in the radial direction, of up to 0.3 mm.

11. Pneumatic vehicle tyre according to one of Claims 1 to 10, **characterized in that** the steel filaments have a tensile strength of 3050 N/mm² to 3330 N/mm².

12. Pneumatic vehicle tyre according to one of Claims 1 to 10, **characterized in that** the steel filaments have a tensile strength greater than 3330 N/mm² to 3650 N/mm².

13. Pneumatic vehicle tyre according to one of Claims 1 to 12, **characterized in that** the steel filaments are arranged in the bracing strips (2c) with a density of 70 epdm to 140 epdm, in particular of 100 epdm to 120 epdm, preferably of 105 epdm to 115 epdm.

## Revendications

1. Pneumatique de véhicule de type radial comprenant une nappe de carcasse (4), deux nappes d'armature (2a, 2b) et un bandage d'armature (3), une bande de renforcement (2c) étant disposée radialement à l'intérieur de la nappe d'armature radialement intérieure (2a) dans les régions d'armature latérales et s'étendant en contact avec la nappe d'armature radialement intérieure (2a) et la nappe de carcasse (4) sur la circonférence du pneumatique, chaque nappe d'armature (2a, 2b) comportant des renforts (2'a, 2'b) parallèles les uns aux autres qui s'étendent suivant un angle (α) de 20° à 40° par rapport à la direction circonférentielle et les renforts (2'a) de l'une des nappes d'armature (2a) croisant les renforts (2'b) de l'autre des nappes d'armature (2b), et les bandes de renforcement (2c) comportant des filaments en acier (2'c) qui sont noyés dans un caoutchouc, qui s'étendent parallèlement les uns aux autres et suivant un angle (β) d'au moins 55° par rapport à la direction circonférentielle et qui ont un diamètre ou une épaisseur déterminée dans la direction radiale de 0,2 mm à 0, 5 mm et une résistance à la traction de 3050 N/mm² à 3650 N/mm²,
**caractérisé en ce que**
les bandes de renforcement (2c) ont dans la direction axiale une largeur (b2) égale à une valeur allant de 20 % à 35 % de la largeur (b₁) de la nappe d'armature la plus large (2a) et **en ce que**
l'angle (β) des filaments d'acier des bandes de renforcement (2c) par rapport à la direction circonférentielle est plus grand de 30° à 40° que l'angle (α) des renforts (2'a, 2'b) dans les deux nappes d'armature (2a, 2b).

2. Pneumatique de véhicule selon la revendication 1, **caractérisé en ce que** les bandes de renforcement (2c) du côté extérieur de la bande de roulement font chacune saillie d'une portion de bord (2"a) de la nappe d'armature radialement intérieure (2a), la largeur (a₁) de ladite portion étant de 5,0 mm à 15,0 mm.

3. Pneumatique de véhicule selon la revendication 1 ou 2, **caractérisé en ce que** les bandes de renforcement (2c) du côté extérieur de la bande de roulement font chacune saillie d'une portion de bord (2"b) de la nappe d'armature radialement extérieure (2a), la largeur (a2) de ladite portion pouvant atteindre 10 mm.

4. Pneumatique de véhicule selon la revendication 1 ou 2, **caractérisé en ce que** les bandes de renforcement (2c) sont disposées de telle sorte que leurs bords du côté extérieur de la bande de roulement soient alignés avec les bords de la nappe d'armature radialement extérieure (2b).

5. Pneumatique de véhicule selon l'une des revendications 1 à 4, **caractérisé en ce que** l'angle (β) des filaments d'acier des bandes de renforcement (2c) par rapport à la direction circonférentielle peut atteindre 65°.

6. Pneumatique de véhicule selon l'une des revendications 1 à 5, **caractérisé en ce que** l'angle (β) des filaments d'acier des bandes de renforcement (2c) est de 60 ± 2° par rapport à la direction circonférentielle.

7. Pneumatique de véhicule selon l'une des revendications 1 à 6, **caractérisé en ce que** l'angle (β) des filaments d'acier des bandes de renforcement (2c) par rapport à la direction circonférentielle est supérieur de 34° à 36° à l'angle (α) des renforts (2'a, 2'b) dans les deux nappes d'armature (2a, 2b).

8. Pneumatique de véhicule selon l'une des revendications 1 à 7, **caractérisé en ce que** les filaments d'acier des bandes de renforcement (2c) croisent les renforts (2'a) de la nappe d'armature radialement intérieure (2a).

9. Pneumatique de véhicule selon l'une des revendications 1 à 8, **caractérisé en ce que** la largeur (b2) des bandes de renforcement (2c) est égale à une valeur allant de 25 % à 30 % de la largeur (b₁) de la nappe d'armature la plus large (2a).

10. Pneumatique de véhicule selon l'une des revendications 1 à 9, **caractérisé en ce que** les filaments d'acier ont un diamètre ou une épaisseur déterminée dans la direction radiale pouvant atteindre 0,3 mm.

11. Pneumatique de véhicule selon l'une des revendications 1 à 10, **caractérisé en ce que** les filaments d'acier ont une résistance à la traction de 3050 N/mm² à 3330 N/mm².

12. Pneumatique de véhicule selon l'une des revendications 1 à 10, **caractérisé en ce que** les filaments d'acier ont une résistance à la traction supérieure à une valeur allant de 3330 N/mm² à 3650 N/mm².

13. Pneumatique de véhicule selon l'une des revendications 1 à 12, **caractérisé en ce que** les filaments d'acier sont disposés dans les bandes de renforcement (2c) avec une densité de 70 epdm à 140 epdm, en particulier de 100 epdm à 120 epdm, de préférence de 105 epdm à 115 epdm.
